# EUROPEAN PATENT APPLICATION

(11) **EP 3 076 012 A1**
(43) Date of publication of application: **05.10.2016**
(21) Application number: 16163189.0
(22) Date of filing: 31.03.2016
(51) Int. Cl.: F03D 7/02

(54) **WIND POWER GENERATION DEVICE AND WIND FARM**

(30) Priority: 31.03.2015 JP 2015070626
(71) Applicant: Hitachi, Ltd., Tokyo 100-8280 (JP)
(72) Inventor: KOBATA, Norihito, Tokyo 100-8280 (JP); KAKUYA, Hiromu, Tokyo 100-8280 (JP)
(74) Representative: MERH-IP Matias Erny Reichl Hoffmann Patentanwälte PartG mbB

(57) **Abstract**

In a wind power generation device (100) that includes blades (101) receiving a wind and rotating and generates power according to a rotation of the blades (101), an operation is controlled according to the automatic restart number of times (NR) or the shutdown number of times of the wind power generation device (100).

## Description

### BACKGROUND OF THE INVENTION

### 1. Field of the Invention

The present invention relates to a wind power generation device converting wind power into power energy and a wind farm.

### 2. Description of the Related Art

Conventionally, when a wind power generation device (hereinafter, also referred to as a windmill) stops a generating operation from the viewpoint of device protection and safety, when it is difficult for the wind power generation device to operate while satisfying predetermined conditions, due to various factors such as a change of an external environment.

For example, when values of a wind speed, a temperature, humidity, and a frequency change of a system are equal to or more than values according to the predetermined conditions and when output power of the windmill and a rotation speed of a blade or a generator deviate from the predetermined conditions according to the change of the external environment, a shutdown starts.

For example, if the shutdown starts, the windmill stops the generating operation. The shutdown starts in response to an alarm issued by a control system, when physical amounts monitored by sensors deviate from the predetermined conditions.

After the windmill starts the shutdown, when a factor (that is, the wind speed deviating from the predetermined condition) causing the shutdown is eliminated and the alarm is released, the windmill can restart. According to the factor of the shutdown before the windmill restarts, the control system of the windmill can automatically restart the windmill without human intervention.

Meanwhile, operations when the windmill shutdowns and starts cause large load and output changes. Therefore, when these operations are generated frequently, this is not preferable from the viewpoint of an increase in fatigue load and an influence on a power system. Particularly, in the automatic restart, because the control system of the windmill performs the restart according to the predetermined conditions, the shutdown and the start may be performed frequently in predetermined time, according to a place where the windmill is disposed and wind conditions.

In Guideline for the Certification of Wind Turbines Edition 2010, Germanischer Lloyd, 2010, to resolve the above problem, a guideline in which the automatic restart number of times in 24 hours is restricted to 3 or less with respect to the automatic restart when a factor causing the shutdown is the same is suggested.

### SUMMARY OF THE INVENTION

A situation where the automatic restart number of times and the shutdown number of times are large becomes an environment severe for the windmill. Therefore, under the severe environment, the windmill is preferably protected by suppressing the shutdown. An object of the present invention is to provide a wind power generation device that realizes reliability improvement. In addition, an object of the present invention is to provide a wind farm that realizes reliability improvement and output improvement.

In order to solve the above issue, a wind power generation device according to an embodiment of the present invention includes blades that receive a wind and rotate, the wind power generation device generating power according to a rotation of the blades, wherein an operation is controlled according to the automatic restart number of times or the shutdown number of times of the wind power generation device.

In addition, in order to solve the above issue, a wind farm according to an embodiment of the present invention includes a plurality of the wind power generation devices, wherein when output power in at least one of the wind power generation devices decreases according to the automatic restart number of times or the shutdown number of times, output power in the other wind power generation devices in which automatic restart is enabled in a predetermined period is controlled such that the output power increases.

The present invention can provide a wind power generation device that realizes reliability improvement. In addition, the present invention can provide a wind farm that realizes reliability improvement and output improvement.

### BRIEF DESCRIPTION OF THE DRAWINGS

Fig. 1 is a diagram illustrating a schematic configuration of a wind power generation device according to an embodiment of the present invention;
Fig. 2 is a diagram illustrating a schematic configuration of a controller of the wind power generation device according to the embodiment of the present invention;
Fig. 3 is a flowchart illustrating a flow of automatic restart of the wind power generation device according to the embodiment of the present invention;
Fig. 4 is a block diagram illustrating a configuration to select an operation mode according to the automatic restart number of times of the wind power generation device according to the embodiment of the present invention;
Fig. 5 is a flowchart illustrating a flow to select an operation mode according to the automatic restart number of times of the wind power generation device according to the embodiment of the present invention;
Fig. 6 is a diagram illustrating a rotation speed target value with respect to a wind speed of a wind power generation device according to an embodiment of the present invention;
Fig. 7 is a diagram illustrating a difference between application of the present invention and non-application of the present invention, in the wind power generation device according to the embodiment of the present invention;
Fig. 8 is a diagram illustrating an output command value with respect to a wind speed of a wind power generation device according to an embodiment of the present invention; and
Fig. 9 is a diagram illustrating a schematic configuration of a wind farm according to an embodiment of the present invention.

### DESCRIPTION OF THE PREFERRED EMBODIMENTS

Preferred embodiments of the present invention will be described in detail below with reference to the accompanying drawings, wherein like reference numerals refer to like parts throughout.

### First embodiment

### (Schematic configuration of first embodiment)

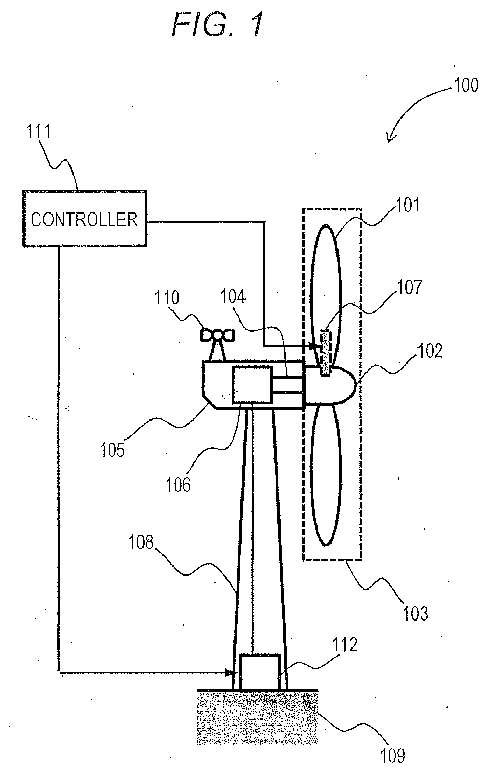

First, a first embodiment of a wind power generation device according to the present invention will be described using Fig. 1.

### (Entire configuration)

Fig. 1 illustrates a schematic configuration of a windmill 100 according to the first embodiment. The windmill 100 according to this embodiment mainly includes a rotor 103, a nacelle 105, and a tower 108. The tower 108 supports the nacelle 105 rotatably and supports loads of the nacelle 105 and the rotor 103. The rotor 103 includes blades 101 and a hub 102 connecting the blades 101 and supporting the blades 101. The rotor 103 is connected to a generator 106 disposed in the nacelle 105 via a main shaft 104. The blades 101 receive a wind, the rotor 103 rotates, the generator 106 connected by the main shaft 104 is rotated, and power can be generated from wind energy. Generated power of the generator 106 can be controlled by a power converter 112 electrically connected to the generator 106.

Each of the blades 101 includes a pitch actuator 107 that can change a position relation of the blade 101 and the hub 102, that is, a blade angle called a pitch angle. The pitch angle of the blade 101 is changed using the pitch actuator 107, so that an amount of energy acquired from the wind can be changed. As a result, generated power of the windmill 100 can be controlled while a rotation speed of the rotor 103 is controlled in a wide wind speed region.

The nacelle 105 is supported at a predetermined height by the tower 108 and the tower 108 is provided in a base 109. The base 109 is provided at a predetermined position on a ground or a sea. In Fig. 1, the rotor 103 and the generator 106 are connected directly by the main shaft 104. However, a speed acceleration device that increases a rotation speed of the rotor and inputs the rotation speed to the generator may be provided.

The windmill 100 further includes an anemometer 110. The anemometer 110 is a wind speed detection unit and calculates an average wind speed in predetermined time from each detected wind speed and outputs the average wind speed. The wind speed detection is not limited to actual measurement using the anemometer and includes the case in which the wind speed is calculated using a prediction value or other measurement value. Hereinafter, the wind speed detected by the anemometer 110 is described as a wind speed V. In this embodiment, the average wind speed in the predetermined time is described as an example. However, when the invention is carried out, a wind speed used for control may not be the average wind speed in the predetermined time. In this embodiment, the case in which the anemometer is used as the wind speed detection unit is described. However, the present invention is not limited to the anemometer and any mechanism capable of detecting the wind speed may be used. In addition, in this embodiment, the anemometer 110 is disposed on the nacelle 105. However, the anemometer 110 may be disposed on the tower 108 or the rotor 103. In addition, a plurality of wind speed detection units may be provided.

### (Controller)

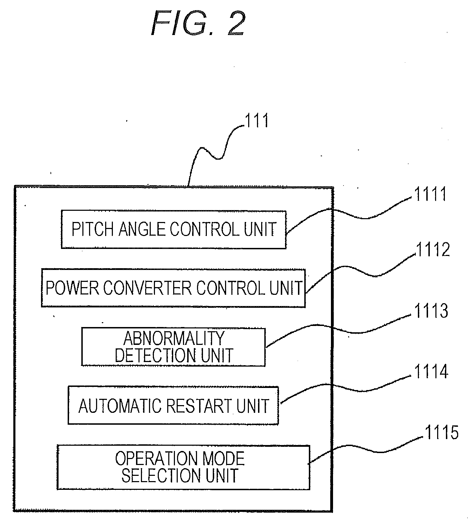

The windmill 100 further includes a controller 111. As illustrated in Fig. 2, a pitch angle control unit 1111, a power converter control unit 1112, an abnormality detection unit 1113, an automatic restart unit 1114, and an operation mode selection unit 1115 are mounted on the controller 111 in a form of programs. In Fig. 1, the controller 111 is disposed outside the nacelle 105 and the tower 108. However, the present invention is not limited thereto and the controller 111 may be disposed inside the nacelle 105 or the tower 108 and may be disposed at other predetermined position, for example, outside the windmill 100.

The pitch angle control unit 1111 and the power converter control unit 1112 calculate a pitch angle target value θ* and an output command value P*, on the basis of the wind speed V detected by the anemometer 110, a rotation speed N of the rotor 103 (or the generator 106), and generated output P of the generator 106, such that the windmill 100 outputs a predetermined rotation speed target value N*. The pitch angle control unit 1111 and the power converter control unit 1112 control the pitch actuator 107 and the power converter 112 according to the pitch angle target value θ* and the output command value P*. If the pitch angle of the blade is changed by the pitch actuator 107, conversion efficiency when the wind power is converted into torque by the rotor 103 can be changed. A pitch angle where conversion efficiency from the wind power to the torque is highest is called fine and a pitch angle where the conversion efficiency is lowest is called feather. An amount of energy obtained from the wind power is controlled by changing the pitch angle, an amount of energy to be output to the system is controlled by changing the output command value, and the rotation speed N and the generated output P of the rotor 103 (and the generator 106) can be controlled.

Here, the predetermined rotation speed target value N* is determined by referring to a table, with respect to the wind speed V obtained by the anemometer 110. In addition, sensors (not illustrated in the drawings) to detect the generated output P and the rotation speed N are provided in the nacelle 105 and outputs of the sensors are input to each control unit.

In the case in which values of a wind speed, a temperature, humidity, and a frequency change of a system deviate from values according to predetermined conditions and the case in which physical amounts such as output power of the windmill and a rotation speed of the blade or the generator deviate from the predetermined conditions according to a change of an external environment, the abnormality detection unit 1113 detects each case as abnormality. The physical amounts are measured by sensors (not illustrated in the drawings) for the individual physical amounts and deviation or non-deviation can be confirmed by comparing sensor outputs and the predetermined conditions. In addition, the abnormality detection unit 1113 stores kinds (shutdown factors) of abnormalities distinguished from the physical amounts deviating from the predetermined conditions.

### (Operation of automatic restart)

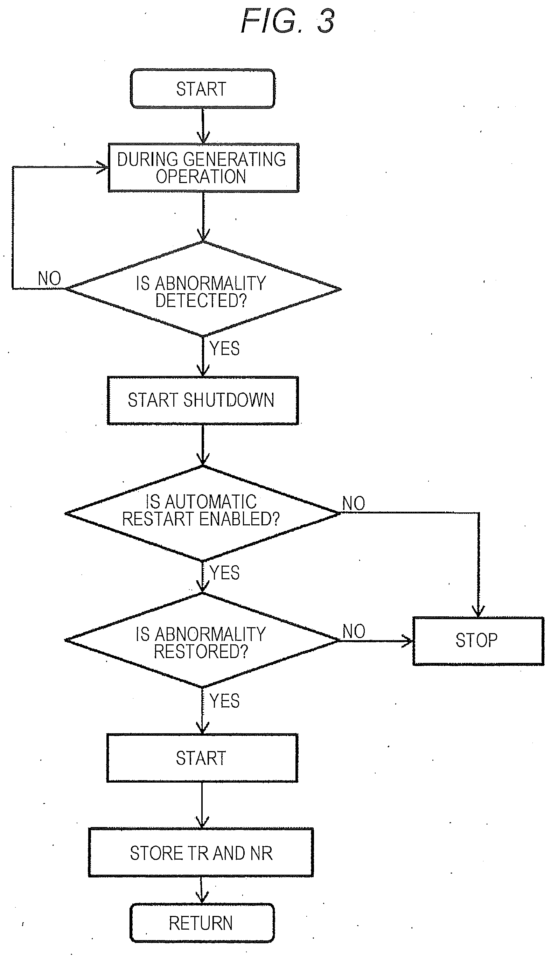

Next, the automatic restart unit 1114 will be described using a flowchart illustrated in Fig. 3. The automatic restart unit 1114 executes operations of the shutdown, the start, and the stop of the windmill 100, according to the flowchart of Fig. 3. If the abnormality detection unit 1113 detects the abnormality, the windmill 100 starts the shutdown.

If the shutdown occurs, a generating operation of the windmill 100 is stopped. In the operation of the shutdown, specifically, the pitch angle of the blade 101 is changed to the angle of the feather (it is referred to as feathering). The rotation speed of the rotor 103 (or the generator 106) is decreased by the feathering. In addition, a braking device such as a brake (not illustrated in the drawings) is provided in the main shaft 104 and the rotation speed of the rotor 103 (or the generator 106) is decreased by operating the braking device. If the rotation speed is less than a predetermined value, the generator 106 is separated from a power system generating and outputting power and the shutdown is completed. After the shutdown is completed, a state in which the pitch angle is maintained at the angle of the feather and the brake brakes the rotor 103 is called a stop or generation stop state.

After the shutdown starts, it is determined whether the automatic restart is enabled, from the factors of the shutdown start stored by the abnormality detection unit 1113 and automatic restart number of times restriction in predetermined time (the predetermined time is referred to as Ti) (the allowable automatic restart number of times at Ti is referred to as NR_{L}). The shutdown factors in which the automatic restart is enabled are previously determined. The shutdown factors and the shutdown factors stored by the abnormality detection unit 1113 are compared with each other and it is determined whether the automatic restart is enabled. The shutdown factors are exemplified in embodiments to be described below. In addition, the current automatic restart number of times NR and the automatic restart number of times restriction NR_{L} in the predetermined time Ti are compared with each other and it is determined whether the automatic restart is enabled. When NR < NR_{L} is satisfied, the automatic restart is enabled and when NR = NR_{L} is satisfied, the automatic restart is disabled until NR is reset. When the automatic restart is disabled, the windmill completes the shutdown and stops the generation. When the automatic restart is enabled, the windmill confirms whether the abnormality detected by the abnormality detection unit is restored. If the abnormality is restored, the windmill can automatically restart without human intervention. At this time, an automatic restart time TR and the automatic restart number of times NR in the predetermined time are stored. Particularly, when the automatic restart is performed first with respect to the shutdown start by a certain factor in the predetermined time Ti (when the shutdown starts in a state in which NR is 0 and the automatic restart is enabled), an automatic restart time (time when NR changes from 0 to 1) is stored separately as TR1. When a current time T satisfies T > TR1 + Ti, NR is reset (NR = 0).

### (Control of this embodiment)

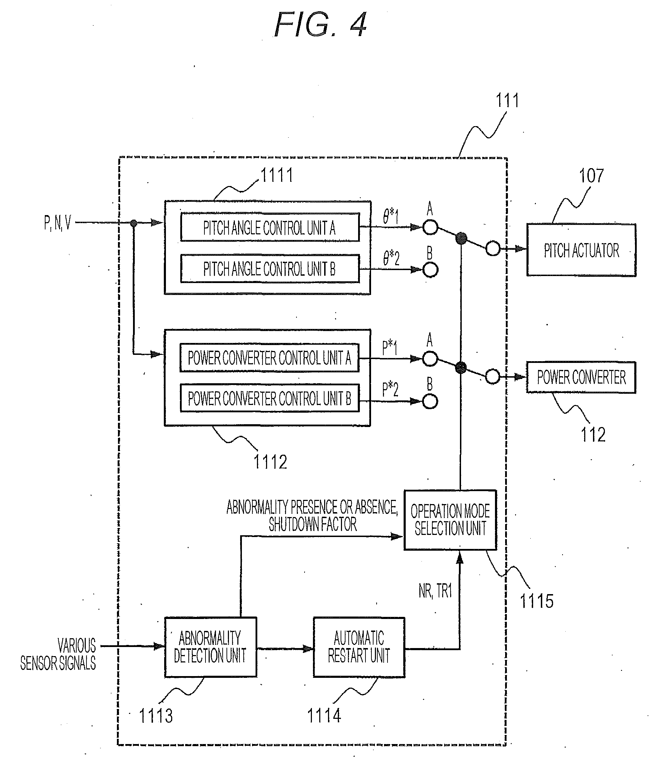

Fig. 4 illustrates a characteristic portion in this embodiment and is a block diagram illustrating a part of the controller 111 mounted on the windmill 100. The controller 111 according to this embodiment includes two pitch angle control units 1111 and two power converter control units 1112. Hereinafter, a mode in which a pitch angle control unit A and a power converter control unit A are selected and an operation of the windmill 100 is executed is described as an operation mode A and a mode in which a pitch angle control unit B and a power converter control unit B are selected and an operation of the windmill 100 is executed is described as an operation mode B. Here, the pitch angle control unit and the power converter control unit are collectively called an operation mode. However, other control unit may be included in the operation mode. In addition, a combination of a plurality of control units may be set as the operation mode (for example, a combination of the pitch angle control unit A and the power converter control unit B may be set as one operation mode). In addition, only the two modes A and B are described as the operation modes. However, the number of operation modes may be two or more. In addition, the modes set as the operation modes are not essential and the operation may be controlled such that the automatic restart or the automatic shutdown is hard to occur.

The operation mode selection unit 1115 selects the operation mode A or B, according to abnormality presence or absence and the shutdown factor by the abnormality detection unit 1113 and the automatic restart number of times NR and the automatic restart time TR1 by the automatic restart unit 1114.

At this time, because the operation mode is selected using the shutdown factor, the operation mode can be selected individually with respect to the shutdown occurring when a different physical amount is not in a predetermined range and the shutdown can be effectively suppressed. In addition, because the operation mode is selected according to the automatic restart number of times with respect to the same shutdown factor, frequent occurrence of the shutdown with respect to a specific shutdown factor can be effectively suppressed.

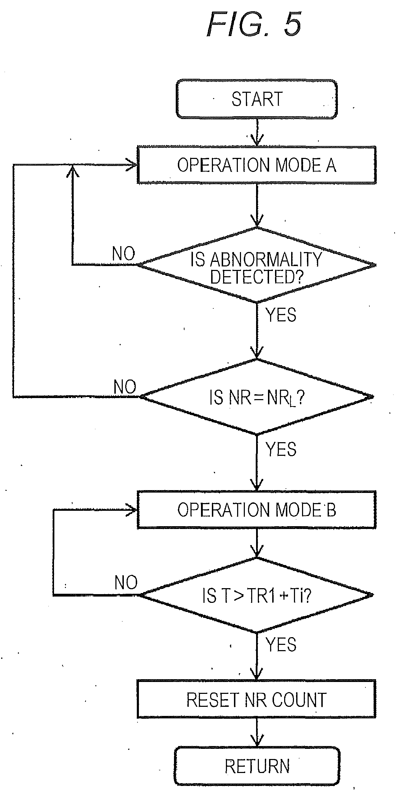

The operation mode selection unit 1115 will be described using a flowchart illustrated in Fig. 5. The operation mode selection unit 1115 selects the operation mode A or the operation mode B, according to the flowchart illustrated in Fig. 5.

The windmill 100 starts the operation in the operation mode A and is operated in the operation mode A until the abnormality detection unit 1113 detects the abnormality. When the abnormality is detected, the current automatic restart number of times NR and the allowable automatic restart number of times NR_{L} in Ti are compared with each other. When NR < NR_{L} is satisfied, the operation mode A is selected. When NR = NR_{L} is satisfied, the operation mode B is selected. When the current time T satisfies T > TR1 + Ti, NR is reset and the operation mode A is selected.

As such, in the configuration according to this embodiment, if the automatic restart number of times becomes the restricted number of times, the operation mode is changed. For this reason, an operation mode in which the shutdown start is suppressed can be selected with respect to the shutdown factor causing the automatic restart number of times to reach the restricted number of times. As a result, when the automatic restart number of times reaches the restricted number of times, the shutdown is suppressed and an operation rate of the windmill can be suppressed from being decreased. In this embodiment, attention is paid to the automatic restart number of times and the shutdown number of times in protecting the windmill. This is because an environment in which the automatic restart number of times and the shutdown number of times are large is considered as an environment severe for the windmill. Therefore, under this environment, to protect the windmill, the operation is controlled such that the shutdown is hard to occur. That the shutdown is hard to occur includes that the pitch angle is controlled to the feather side, such that an output is lower than a rated output. The mode is changed to a mode in which the shutdown is hard to occur, so that the windmill can be protected. By setting a predetermined time interval and counting the number of times in the predetermined time or comparing the number of times with a threshold value, it can be determined whether the automatic restart number of times and the shutdown number of times are large.

### Second embodiment

A second embodiment illustrates a specific example of an operation mode A and an operation mode B to suppress a shutdown in the case in which a rotation speed N of a rotor 103 (or a generator 106) of a windmill 100 deviates from a predetermined condition and the shutdown and automatic restart occur frequently, in the configuration according to the first embodiment. Here, the deviation of the rotation speed N from the predetermined condition is a shutdown factor in which the automatic restart is enabled.

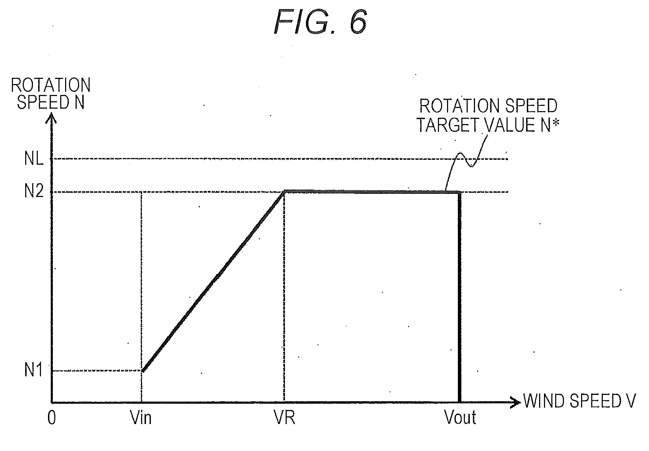

Fig. 6 illustrates a rotation speed target value N* with respect to a wind speed V of the windmill 100. The windmill 100 starts a generating operation at a rotation speed N1 and the rotation speed thereof reaches a rated rotation speed N2 at the time of a rated wind speed VR. At a wind speed (VR ≤ V ≤ Vout) equal to or higher than the rated wind speed, the rotation speed is controlled to the rated rotation speed N2 by a pitch angle control unit 1111 and a power converter control unit 1112. If NL is determined as an upper limit of the rotation speed and the rotation speed N becomes equal to or higher than NL, abnormality is determined by an abnormality detection unit 1113 and the windmill 100 starts the shutdown.

The rotation speed N is more than the upper limit NL, for example, by accelerating the rotor 103 (and a drive train such as a main shaft 104 and a generator 106 connected to the rotor 103) by capturing wind energy excessively during a period until a pitch angle is controlled to an angle of feather, from restriction of a change speed (operation speed of a pitch actuator 107) of the pitch angle of the windmill, when the wind speed becomes high temporarily. To prevent the acceleration of the rotor 103 more surely, it is considered that an amount of energy acquired from a wind is previously restricted and torque accelerating the rotor 103 is restricted.

Therefore, in this embodiment, an angle (fine B) of fine of a pitch angle controlled by a pitch angle control unit B of the operation mode B is restricted to be smaller than an angle (fine A) of fine of a pitch angle controlled by a pitch angle control unit A of the operation mode A, as viewed from an angle of feather. Thereby, because torque conversion efficiency of the rotor 103 decreases, torque when the same wind speed is input can be restricted to be smaller than torque in the fine A. In this method, because only the angle of the fine of the pitch angle control unit B may be changed, suppression of the shutdown occurring when the rotation speed N is more than the upper limit NL can be easily realized.

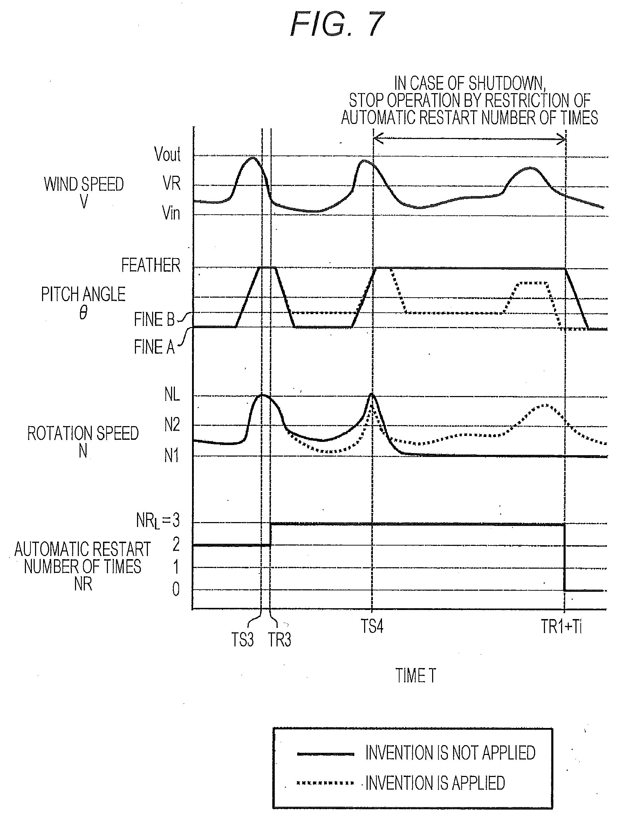

Fig. 7 illustrates a change of a pitch angle and a rotation speed of the windmill 100 when an angle of fine of a pitch angle is restricted to the fine B. In Fig. 7, a thick broken line shows the case in which the present invention is applied and a thick line shows the case in which the present invention is not applied. Fig. 7 illustrates the case in which automatic restart number of times restriction NR in predetermined time Ti is set to 3. In Fig. 7, TS3 shows time when the rotation speed N is more than NL and a third shutdown operation starts and TS4 shows time when a fourth shutdown operation starts.

At the time TS3, the rotation speed N is more than the upper limit NL of the rotation speed and the third shutdown starts. At this time, the automatic restart number of times NR is 2. For this reason, if the abnormality is eliminated, the automatic restart can be performed.

In Fig. 7, the automatic restart is performed at time TR3 immediately after the time TS3 and the automatic restart number of times NR reaches 3 to be the restriction number of times. When the present invention is not applied, the operation mode does not change and the operation mode A is maintained. In the operation mode A, because an increase rate of the rotation speed does not change, the rotation speed N is more than the upper limit NL of the rotation speed due to the same wind speed change as the wind speed change causing the third shutdown and the fourth shutdown is performed at TS4. The automatic restart with respect to the fourth shutdown cannot be performed due to the number of times restriction. Therefore, when the present invention is not applied, the generating operation should be stopped until the time becomes TR1 + Ti.

Meanwhile, the case in which the present invention is applied is described using Figs. 4 and 5. Specifically, when NR = NR_{L} is satisfied, the operation mode is switched from the operation mode A to the operation mode B, by the operation mode selection unit 1115. The operation mode A is switched into the operation mode B, so that the angle of the fine of the pitch angle is restricted to the fine B. Thereby, because the torque accelerating the rotor 103 becomes smaller than the torque in the operation mode A, an increase rate of the rotation speed decreases. As a result, even when the same wind speed change as the wind speed change causing the third shutdown is input to the rotor 103, the rotation speed N is not more than the upper limit NL of the rotation speed. For this reason, the fourth shutdown can be suppressed and the generating operation can be continuously executed in a state in which the windmill is protected.

### Third embodiment

A third embodiment illustrates a specific example of an operation mode A and an operation mode B to suppress shutdown in the case in which output power P of a windmill 100 (or a generator 106) deviates from a predetermined condition and the shutdown and automatic restart occur frequently, in the configuration according to the first embodiment. Here, the deviation of the output power P from the predetermined condition is a shutdown factor in which the automatic restart is enabled.

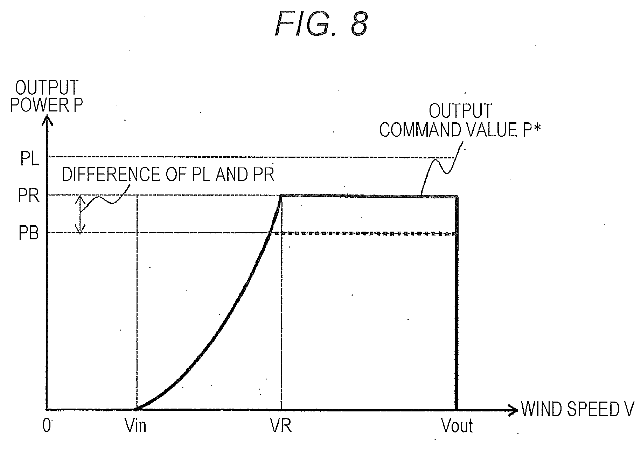

Fig. 8 illustrates an output command value P* with respect to a wind speed V of the windmill 100. The windmill 100 starts a generating operation at a cut-in wind speed Vin and the output command value P* is set to a rated output PR at a rated wind speed VR. At a wind speed (VR ≤ V ≤ Vout) equal to or higher than the rated wind speed, an output is controlled to the rated output PR according to the output command value P*, by a pitch angle control unit 1111 and a power converter control unit 1112. If PL is determined as an upper limit of the output power P and the output power P becomes equal to or more than PL, abnormality is determined by an abnormality detection unit 1113 and the windmill 100 starts the shutdown.

From a rapid change of the wind speed V and restriction of a mechanical response speed of a pitch actuator 107, the output power P may be more than the upper limit PL in a process for controlling the output power P to the output command value P*. Therefore, an upper limit B of an output command value P* of a power converter control unit B of the operation mode B is restricted to be smaller than an upper limit A of an output command value of a power converter control unit A of the operation mode A. As illustrated in Fig. 8, an upper limit PB of the output command value P* in the operation mode B is determined, so that shutdown occurring when the output power is equal to or more than the upper limit PL of the output power is suppressed.

Here, PB is a value obtained by reducing a difference of the upper limit PL of the output power and the rated output PR (upper limit A of the output command value P*) from the rated output PR. In the case of this embodiment, when the operation mode B is selected, the output power is already more than the upper limit PL of the output power for three times and the shutdown operation starts. That is, when the output command value P* is set as the rated output PR, a change in which a output power change width during a control process is at least a width of a difference of PL and PR occurs in predetermined time (Ti).

Therefore, if the possibility that the same output change width occurs is considered, it is effective to reduce the upper limit of the output command value by the difference of PL and PR. Thereby, the possibility of the shutdown can be reduced while the decrease in the generated output by the operation mode B is minimally suppressed.

### Fourth embodiment

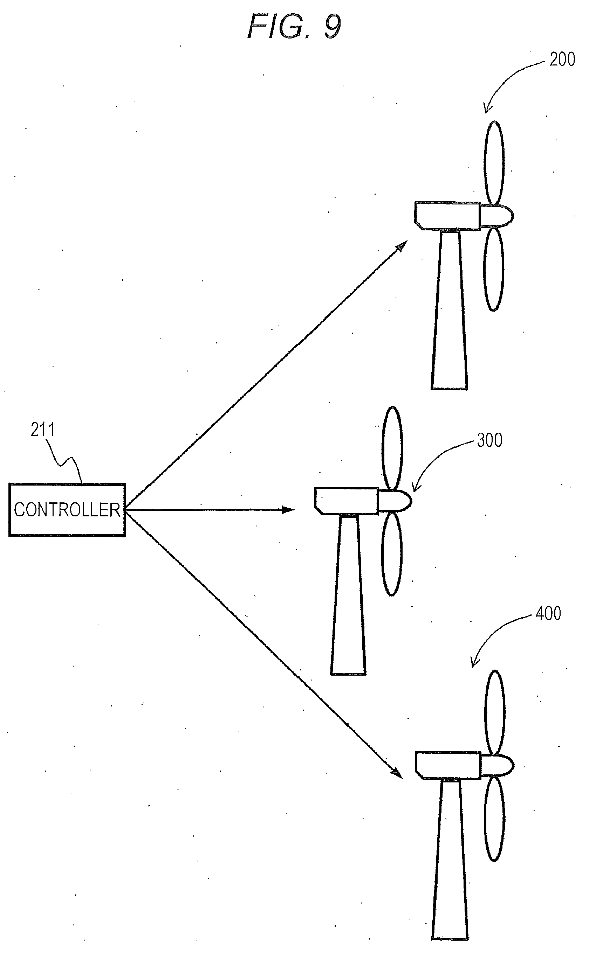

A fourth embodiment will be described using Fig. 9. In the embodiments described above, the single wind power generation device 100 is described as the example. However, in this embodiment, a wind farm in which a plurality of wind power generation devices are disposed will be described.

As illustrated in Fig. 9, in this embodiment, three wind power generation devices 200, 300, and 400 are disposed and each wind power generation device is controlled by one controller 211. In the case in which attention is paid to only the single wind power generation device (for example, the wind power generation device 200), output power may be reduced intentionally to protect the wind power generation device. However, in the entire wind farm, other wind power generation device (for example, the wind power generation device 300 or 400) may perform automatic restart in a predetermined period. In this case, output power in the wind power generation device in which the automatic restart is enabled in the predetermined period may be controlled such that the output power increases. By this control, the entire output power of the wind farm can be maintained without reduction. That is, both objects of protection of a windmill to be protected and maintenance of output power can be achieved at the same time.

In Fig. 9, a centralized processing system for controlling the individual wind power generation devices by one controller is illustrated. However, a distributed processing system for controlling the individual wind power generation devices by a plurality of controllers cooperating with each other can be used.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A wind power generation device (100) comprising:
blades (101) that receive a wind and rotate,
the wind power generation device (100) generating power according to a rotation of the blades (101), wherein
an operation is controlled according to the automatic restart number of times (NR) or the shutdown number of times of the wind power generation device (100).

2. The wind power generation device (100) according to claim 1, wherein
the operation is controlled according to the automatic restart number of times (NR) or the shutdown number of times of the wind power generation device (100) in predetermined time (Ti).

3. The wind power generation device (100) according to claim 1, wherein
the operation is controlled such that a shutdown is hard to occur, in consideration of the automatic restart number of times (NR) or the shutdown number of times of the wind power generation device (100).

4. The wind power generation device (100) according to claim 1, wherein
the operation is controlled according to a start factor of a shutdown in predetermined time (Ti) and the automatic restart number of times (NR) after the shutdown start.

5. The wind power generation device (100) according to claim 1, further comprising:
a hub (102) that supports the blades (101) rotatably; and
a plurality of pitch angle control units (1111) that adjust pitch angles of the blades (101) with respect to the hub (102).

6. The wind power generation device (100) according to claim 5, further comprising:
at least a first pitch angle control unit (1111) and a second pitch angle control unit (1111), wherein
a fine-side maximum angle in the second pitch angle control unit (1111) is closer to a feather side than a fine-side maximum angle in the first pitch angle control unit (1111).

7. The wind power generation device (100) according to claim 1, further comprising:
a generator (106) that generates power according to the rotation of the blades (101);
a power converter (112) that controls power output from the generator (106); and
a plurality of power converter control units (1112) that controls the power converter (112).

8. The wind power generation device (100) according to claim 7, further comprising:
at least a first power converter control unit (1112) and a second power converter control unit (1112), wherein
a maximum value of an output command value (P*) in the second power converter control unit (1112) is smaller than a maximum value of an output command value (P*) in the first power converter control unit (1112).

9. The wind power generation device (100) according to claim 8, wherein
the maximum value of the output command value (P*) in the second power converter control unit (1112) is smaller than the maximum value of the output command value (P*) in the first power converter control unit (1112), by a difference of a predetermined generated output upper limit (PL) and a rated generated output (PR).

10. The wind power generation device (100) according to claim 1, further comprising:
at least two different operation modes (A, B), wherein
any one of the operation modes (A, B) is selected according to the automatic restart number of times (NR) or the shutdown number of times of the wind power generation device (100).

11. The wind power generation device (100) according to claim 10, wherein
the restriction number of times of the automatic restart number of times (NR) or the shutdown number of times in predetermined time (Ti) is previously determined, and
when the automatic restart number of times (NR) is equal to or more than the restriction number of times, the operation mode is changed.

12. A wind farm comprising:
a plurality of the wind power generation devices (200, 300, 400) according to claim 1, wherein
when output power (P) in at least one of the wind power generation devices (200, 300, 400) decreases according to the automatic restart number of times (NR) or the shutdown number of times, output power (P) in the other wind power generation devices (200, 300, 400) in which automatic restart is enabled in a predetermined period is controlled such that the output power (P) increases.
